# EUROPÄISCHE PATENTSCHRIFT

(11) **EP 2 706 857 B1**
(45) Veröffentlichungstag und Bekanntmachung des Hinweises auf die Patenterteilung: **13.06.2018**
(21) Anmeldenummer: 12719685.5
(22) Anmeldetag: 04.05.2012
(51) Int. Cl.: A21B 1/42, A21B 3/00, A21B 1/46

(54) **BACKOFEN ZUM HERSTELLEN VON GEBACKENEN PRODUKTEN**
BAKING OVEN FOR PRODUCING BAKED PRODUCTS
FOUR DE CUISSON POUR LA PRODUCTION DE PRODUITS AU FOUR

(30) Priorität: 10.05.2011 AT 6602011
(43) Veröffentlichungstag der Anmeldung: 19.03.2014
(73) Patentinhaber: Haas Food Equipment GmbH, 1210 Wien (AT)
(72) Erfinder: HAAS, Johann, A-3400 Klosterneuburg (AT); HAAS, Josef, A-2100 Leobendorf (AT); JIRASCHEK, Stefan, A-2202 Königsbrunn (AT); KOPF, Martin, A-3482 Gösing am Wagram (AT)
(74) Vertreter: Puchberger & Partner Patentanwälte
(86) Internationale Anmeldenummer: PCT/EP2012/058204
(87) Internationale Veröffentlichungsnummer: WO 2012/152675

(56) Entgegenhaltungen:
- EP-A1- 0 399 269
- EP-A2- 1 346 677
- WO-A1-2007/051294
- WO-A2-2006/132904
- CN-Y- 2 609 351
- CN-Y- 201 379 452
- DE-A1- 4 140 138
- DE-U1- 20 219 540
- GB-A- 2 263 390
- JP-A- 2000 210 201
- US-A1- 2007 012 307
- US-B2- 7 932 483

## Beschreibung

Die Erfindung betrifft einen Backofen zum Herstellen von gebackenen Produkten, insbesondere von essbaren knusprigen Waffeln oder Weichwaffeln, wobei als Bestandteil einer Backzange jeweils eine untere und eine obere Backplatte vorgesehen sind, deren Backflächen auf Backtemperatur heizbar sind, die Backzangen in mit Teig beschickter geschlossener Stellung durch den Backraum bewegbar sind und die Backplatte eine Sensoreinrichtung zur Erfassung der Temperatur der Backplatte und/oder des beim Backprozess auf die Backfläche der Backplatte einwirkenden Druckes aufweist, und wobei die Sensoreinrichtung zumindest einen Sensor enthält.

Derartige Backöfen sind insbesondere Waffelbacköfen. Waffelbacköfen mit umlaufenden Backzangen sind seit langer Zeit für die industrielle Erzeugung von Waffeln jeder Art bekannt. Weiters ist es auch schon bisher bekannt, die Ofentemperatur zu messen und zu regeln, um einen guten Backprozess zu erreichen. Die derzeitigen Temperaturmessungen erfolgen aber immer nur indirekt durch Infrarotwärmesensoren, die im Ofenraum angeordnet sind und die Temperatur beispielsweise an der Backplattenrückseite messen. Nachteilig ist dabei die große Trägheit des Systems und diese Temperaturmessung ergibt keine Information über den Temperaturverlauf während des Backvorgangs in der Platte und schon gar nicht an der Backfläche.
Der CN 2 609 351 Y ist ein Grillgerät zu entnehmen, deren Grillplatte Temperatursensoren aufweisen, die in das Grillgut wie Fleisch einstechen oder am Grillgut anliegen und die Temperatur des Grillgutes messen.

Die DE 202 19 540 U1 offenbart die Merkmale des Oberbegriffs des Anspruchs 1 und wird als nächstliegender Stand der Technik angesehen. Sie beschreibt einen Zangenbackautomat, bei dem der Teigauftrag auf die Backplatten von verschiedenen Backparametern gesteuert wird.
Die US 2007/0012307 A1 zeigt einen Tunnelofen für Pizzen mit berührungsloser Übertragung von Daten. Aus der US 7 932 483 B2 sind SAW-Sensoren zur Temperaturmessung in Garöfen in Verband mit einer drahtlosen Datenübertragung bekannt geworden.

Die WO 2006 132 904 A2 zeigt eine Kochvorrichtung und ein Verfahren zur Produkterkennung.

Die Messung des in der geschlossenen Backzange auftretenden Druckes wurde bisher bei industriellen Backvorgängen überhaupt nicht vorgenommen und nicht zur Backprozesssteuerung verwendet. Dies gilt insbesondere für Backzangen, die durch einen Backraum des Ofens hindurchgeführt werden, wobei eine Verkabelung wie bei stationären Backöfen nicht möglich ist.

Der Backprozess kann durch viele Faktoren verändert oder gestört werden, wodurch es zu fehlerhaften Backvorgängen und Erhöhung des Ausschusses kommt. Beispielsweise kann sich die Teigzusammensetzung hinsichtlich Wassergehalt oder Mehlqualität oder anderen Teigfaktoren ändern. Weiters kann es durch Verschmutzung z.B. durch klebenbleibende Backreste zu Mehrfachaufgüssen auf den Backplatten kommen, wodurch nicht nur das Backprodukt unbrauchbar wird, sondern auch die Backplatte und die mechanischen Teile des Zangenwagens beschädigt werden können.
Bisher konnten viele dieser Störungen des Backprozesses nur nach dem Backprozess anhand der fehlerhaften Backprodukte festgestellt werden, wodurch insbesondere bei schnelllaufenden Backöfen ein erheblicher Ausschuss auftritt.
Aufgabe der vorliegenden Erfindung ist es daher, die genannten Nachteile zu vermeiden, durch Messung von Druck und/oder Temperatur direkt in der Backplatte und möglichst nahe an der Backfläche während des Backprozesses Messungen vorzunehmen und damit die Möglichkeit zu haben, rechtzeitig die Backparameter zu regeln. Der Operator des Backofens soll beispielsweise anhand der Messdaten im Falle einer Sollwertabweichung in der Lage sein, die Parameter wie Temperatur, Teigmenge, Rezeptur und Bandgeschwindigkeit zu regulieren. Weiters sollen sich Verschmutzungen, Abnutzungserscheinungen und dadurch bedingte Doppelaufgüsse vermeiden lassen. Ein Ziel ist auch die vollautomatische Regelung der Backofensteuerung anhand der gemessenen Parameter. Eine Vorrichtung, umfassend die Backplatten und die Sensoreinrichtung, soll für alle Backöfen einsetzbar sein, bei denen eine Regelung unter Verwendung der Parameter Temperatur und Druck sinnvoll ist. Insbesondere sind dies Waffelbacköfen für die Herstellung knuspriger Flachwaffeln, von Waffelprodukten mit dreidimensionaler Formgebung, ebener Backprodukte, die nach dem Backvorgang in erhitztem Zustand dreidimensional geformt werden und auch Weichwaffeln. Die industrielle technische Arbeitsweise dieser Backöfen erfolgt mittels umlaufender Backzangen, die aneinandergereiht angeordnet sind, wobei die Backzangen je eine obere und untere Backplatte umfassen und die Backzangen zur Teigaufnahme geöffnet werden, nach dem Verschließen den Backraum durchqueren und nach dem Ausbacken des Produktes zur Entnahme des Backproduktes wieder geöffnet, dann gesäubert und dann wieder der Teigauftragstation zugeführt werden. Dieser Stand der Technik ist beispielsweise in der AT 378 470 B1 und der analogen US 4 438 685 beschrieben.

Die Erfindung löst die gestellten Aufgaben durch die Merkmale des Anspruchs 1. Die Sensoraufnahmeöffnung ist von der Rückseite der Backplatte ausgehend zu einem Messabschnitt bis nahe an die Backfläche heranreichend ausgebildet, wobei die Backfläche und der Messabschnitt durchgehend verlaufend sind.
Alternativ kann die Sensoraufnahmeöffnung von der Rückseite der Backplatte ausgehend die Backplatte durchragen, wobei der Sensorkopf mit seiner Sensormembran in der Backfläche liegt und mit dieser gleich profiliert ist.
Der Messabschnitt der Sensoraufnahmeöffnung kann einen zum Sensorkopf oder dessen Sensormembran ragenden Stempel zur Übertragung der auf den Messabschnitt einwirkenden Messgrößen aufweisen. Alternativ kann auch die Sensormembran einen zum Messabschnitt ragenden Stempel aufweisen. Der Messabschnitt weist beispielsweise etwa eine Wandstärke zwischen 1 und 3mm auf.
Die Sensoraufnahmeöffnung kann als ein in die Backplatte hineinragendes Sackloch ausgebildet und der Sensor mit seinem Sensorkörper zylindrisch geformt und mittels eines Ringspannelementes in der Backplatte befestigt sein. Weiters ist der Sensor ein passiver, bevorzugt mittels elektromagnetischem Feld abfragbarer Temperatur-Drucksensor, der an seiner Sensorrückseite eine Sensorantenne zur Energie- und Informationsübertragung trägt. Die Sensorantenne ist eine H-Schlitz-Antenne. Unter der Sensorantenne ist ein Reflektorblech angeordnet, welches am Sensorkörper oder dessen Schaft befestigt ist.
Dem Sensor sind ein oder mehrere Lesegeräte zugeordnet, die das elektromagnetische Feld erzeugen und auswerten. Der Sensor ist zur Abgabe der Informationen hinsichtlich Druck, Temperatur und eines für den Sensor charakteristischen Identifikationsmerkmals eingerichtet. Die Backplatte kann auch mehrere Sensoren aufweisen. Die Backplatte kann Bestandteil von in einem Backofen umlaufenden Backzangen sein, die jeweils eine untere und eine obere Backplatte aufweisen, wobei die Backzangen in mit Teig beschickter geschlossener Stellung durch den Backraum bewegbar sind. Die Sensoreinrichtung kann aus ein oder mehreren Sensoren an der oberen und/oder unteren Backplatte bestehen. Zumindest eine der in einem Backofen umlaufenden Backzangen ist mit zumindest einer Sensoreinrichtung versehen. Mehrere oder alle Backzangen eines Backofens können mit einer Sensoreinrichtung versehen sein. Im Backofen ist bevorzugt eine die Stellung jeder Backzange und deren mit der Sensoreinrichtung versehenen Backplatten anzeigende Positionsanzeige vorgesehen, um jeden von der Leseeinrichtung gelesenen Messwert einer bestimmten Backplatte und Backzange und deren Position im Backofen zuordnen zu können. Ein oder mehrere Lesegeräte sind im Backraum aufeinanderfolgend vorgesehen und die nacheinander abgelesenen Messwerte und die Identifikationsmerkmale der Sensoreinrichtung der Backplatte(n) werden einer Auswertvorrichtung zugeleitet. Als Sensoren werden vorteilhaft SAW-Sensoren auf Basis piezoelektrischer Substratkristalle verwendet. Weiters ist die Vorrichtung bevorzugt ein Backofen zum Herstellen von gebackenen Produkten, die in einer Backzange zwischen zwei übereinander angeordneten Backplatten entstehen, wobei der Backofen ein mit einer äußeren Wärmeisolierung versehenes Ofengestell besitzt und im Backofen umlaufende Backzangen vorgesehen sind, die entlang einer durch den Backraum des Backofens führenden Umlaufbahn angeordnet sind und von der Fördereinrichtung des Backofens entlang der Umlaufbahn durch den Backofen befördert werden, wobei im Ofengestell an einem außerhalb des Backraumes angeordneten Teil der Umlaufbahn der Backzangen eine Einrichtung zum Aufklappen der Backzangen, eine Ausgabestation für die gebackenen Produkte, eine Beschickungsstation zum Beschicken der Backzangen und einen Einrichtung zum Zuklappen der Backzangen in Laufrichtung der Backzangen hintereinander angeordnet sind, und, wobei eine in den Backofen integrierte, die Arbeitstätigkeit des Backofens und den in den Backzangen ablaufenden Backprozess erfassende Überwachungseinrichtung vorgesehen ist, die versehen ist mit:
(a) einer Sensoreinrichtung, die zumindest einen an einer Backzange angeordneten, den in der Backzange ablaufenden Backprozess erfassenden Sensor umfasst, der als ein passiver, durch ein elektrisches Magnetfeld abfragbarer Sensor ausgebildet ist,
(b) einer Sende- und Empfangseinrichtung, die im Backofen stationär angeordnet ist und zumindest eine an der Umlaufbahn der Backzangenkette angeordnete Sende- und Empfangantenne umfasst, die über das elektromagnetische Feld mit dem Sensor der Sensoreinrichtung kommuniziert, und
(c) einer Auswertvorrichtung, die die vom Sensor kommenden Signale verarbeitet und Monitoring-Signale erzeugt.

Weitere Merkmale sind den Ansprüchen, der nachfolgenden Beschreibung und den Zeichnungen zu entnehmen.
Nachstehend wird die Erfindung anhand der Zeichnungen näher erläutert.
Fig. 1 ist die Schrägansicht von zwei einander zugeordneten und geschlossenen Backplatten und
Fig. 2 ein Schnitt nach der Linie II-II in Fig. 1.
Fig. 3 zeigt die Schrägansicht einer Backzange gemäß Erfindung und
Fig. 4 einen Ausschnitt eines Querschnitts gemäß Linie IV-IV in Fig. 3.
Fig. 5, Fig. 6 und Fig. 7 zeigen verschiedene Ausführungsbeispiele mit verschiedenen Anordnungen der Sensoren in den Backplatten.
Die Figuren 8 und 9 zeigen als Schrägansicht und im Schnitt ein Ausführungsbeispiel für eine Backzange, wobei die Backplatten nicht selbsttragend, sondern in einem Traggestell angeordnet sind.
Fig. 10a, b zeigen die Innenansicht einer Backplattenhälfte für gegossene dreidimensionale Waffelprodukte und den Schnitt durch die mittlere Matrize bei geschlossener Form.
Die Fig. 11 und 12 zeigen zwei Seitenansichten von Backöfen, in denen die erfindungsgemäßen Backplatten mit den zugehörigen Auswert- und Leseeinrichtungen verwendet werden können.
Fig. 13 und 14 zeigen schematisch alternative Details.

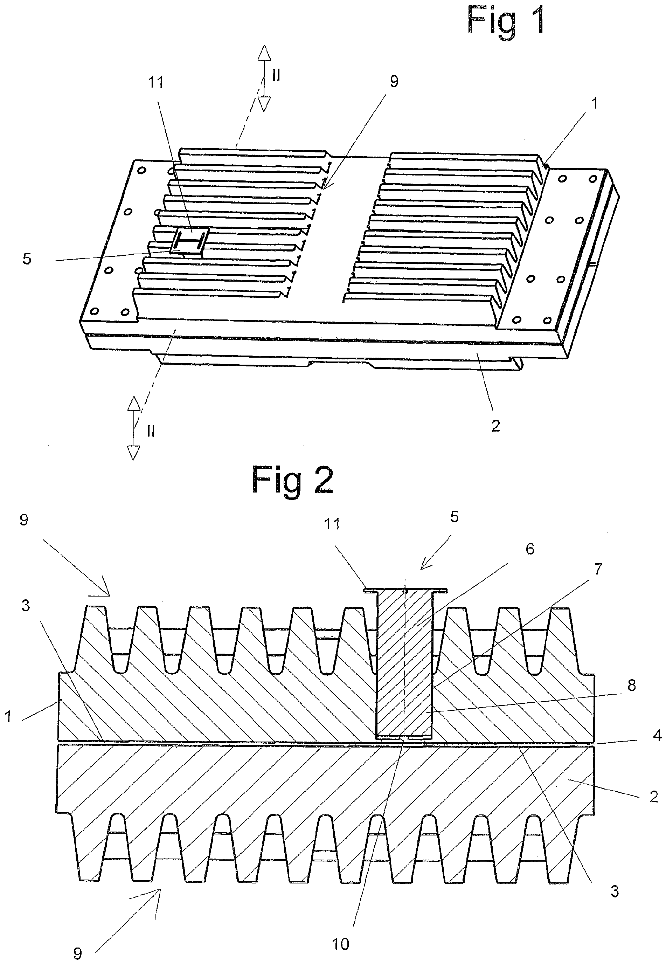

Die Figuren 1 bis 3 zeigen erfindungsgemäße Backplatten, deren prinzipieller Aufbau dem Stand der Technik entspricht. Die dargestellte Ausführungsform zeigt eine obere Backplatte 1 und eine untere Backplatte 2, wobei es sich hier um selbsttragende Backplatten handelt, die kein Traggestell benötigen. Die beiden Backplatten liegen in dem geschlossenen dargestellten Zustand soweit an den Backflächen aneinander, dass zwischen den Backflächen lediglich der benötigte Spalt 4 für den auszubackenden Teig verbleibt. Die Backflächen können in bekannter Weise mit einer Riffelung versehen sein, wie dies von Flachwaffeln oder Weichwaffeln bekannt ist. Diese Riffelung ist in den Figuren 1 bis 3 nicht dargestellt.

Wie in Fig. 2 im Schnitt dargestellt ist, weist die obere Backplatte eine Sensoreinrichtung 5 in Form eines einzelnen Sensors 6 auf. Der Sensor 6 ist in einer Sensoraufnahmeöffnung 7 in der Backplatte angeordnet, wobei bei diesem Ausführungsbeispiel der Sensor mit seinem Sensorkopf 8 bis nahe an die Backfläche 3 der Backplatte 1 heranreicht.

Wie in Fig. 2 ebenfalls zu sehen ist, steht die Sensoraufnahmeöffnung 7 im Wesentlichen orthogonal auf die Backfläche 3 und die Sensoraufnahmeöffnung erstreckt sich vom Backplattenrücken 9 in die Backplatte hinein.

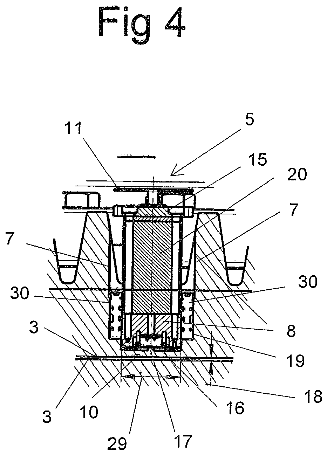

Wie später anhand der Fig. 4 noch näher erläutert wird, reicht der Sensor mit seinem Sensorkopf 8 bis nahe an die Backfläche 3 heran, wobei zwischen der Backfläche 3 und dem Sensorkopf bzw. der Sensormembran, die den Sensorkopf abschließt, eine dünne Schicht aus dem Material der Backplatte stehenbleibt. Der dünne Bereich der Backplatte ist im folgenden als Messabschnitt 10 bezeichnet. Am anderen Ende des Sensors 6 befindet sich die Sensorantenne 11, die gemäß Fig. 1 als H-Schlitz-Antenne ausgebildet ist. Die Darstellungen in diesen Figuren sind nur rein schematisch gehalten.

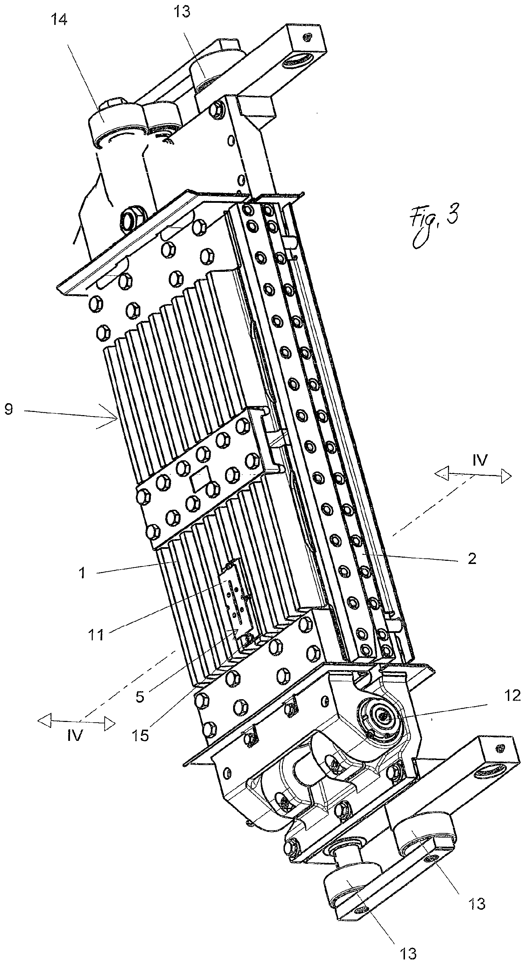

Die Fig. 3 zeigt ein Beispiel für die konkrete Anordnung der Backplatten 1 und 2 in einer Backzange. Durch Schwenken der oberen Backzange 1 um das Backzangengelenk 12 kann die Backzange in bekannter Weise geöffnet und wieder geschlossen werden. Die Backzange bildet mit den Rollen 13 den Backzangenwagen und eine Vielzahl derartiger Backzangenwagen bilden aneinander gereiht die Backzangenkette, die über eine Umlaufbahn geführt ist. Die Steuerrolle 14 dient zur Steuerung der Klappbewegung der oberen Backplatte 1.

Nähere Details zur Funktionsweise derartiger Backvorrichtungen ist z.B. dem eingangs genannten Stand der Technik zu entnehmen und auf diesen wird besonders hingewiesen.

Zur Anordnung des Sensors 6 mit der Sensorantenne 11 sei noch gesagt, dass diese Antenne und deren Reflektorplatte 15 möglichst dicht an der Backplatte liegen soll ohne jedoch die Funktionsfähigkeit der Antenne zu beschränken. Die Sensorantenne 11 kann auch in einer leichten Vertiefung der Backplatte bzw. der Backplattenrippen liegen.

Die Fig. 4 zeigt ein Ausführungsbeispiel für die Anordnung des Sensors 6 in der Backplatte.

Der Sensor ist in der Sensoraufnahmeöffnung 7 eingesetzt und wird von einem Ringspannelement 30 gehalten, wobei diese Sensoraufnahmeöffnung als abgestufte Sacklochbohrung ausgebildet ist. Der Sensor umfasst den Sensorkopf 8, der nach unten zu mit der Sensormembran 16 abgeschlossen ist. Die Sensoraufnahmeöffnung 7 reicht knapp bis an die Backfläche 3 der Backplatte heran, wobei ein Messabschnitt 10 zwischen der Backfläche und der Sensormembran 16 besteht, der dünn genug ist, um Temperatur und Druckverhältnisse auf der Backfläche 3 rasch an den Sensorkopf 8 weiterzugeben.

Zur Kontaktierung und Weiterleitung der Parameter zwischen dem Messabschnitt 10 und der Sensormembran 16 ist ein Stempel 17 vorgesehen, der im vorliegenden Ausführungsbeispiel als kleiner Fortsatz des Messabschnitts 10 ausgebildet ist, der sich in Richtung zur Sensormembran 16 erstreckt.

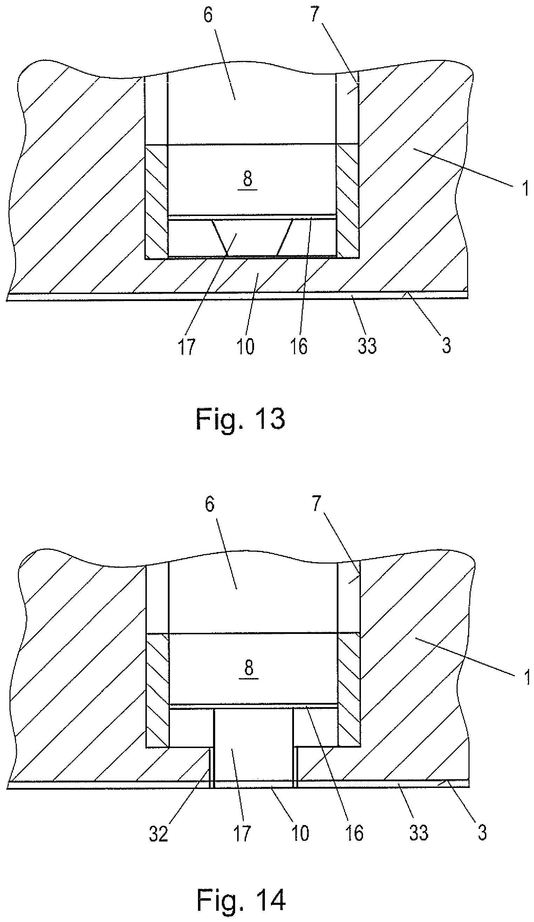

Es liegt selbstverständlich im Belieben des Fachmannes, alternativ den Stempel 17 als Teil der Sensormembran 16 vorzusehen und den Stempel nach unten gegen den Messabschnitt 10 wirken zu lassen, wie dies in Fig. 13 dargestellt ist.

Mit dem Bezugszeichen 18 ist die Wandstärke des Messabschnitts 10 eingezeichnet und diese liegt in der Praxis zwischen 0,5 und 5mm, bevorzugt zwischen 1 und 3mm. Die Wandstärke des Messabschnitts hängt vom Material der Backplatte und der Empfindlichkeit des Sensors ab. Wesentlich ist, dass Temperatur und Druck in genügender Zeit und genügendem Ausmaß durch den Sensor feststellbar sind.

Der Messabschnitt 10 umfasst einen Flächenbereich, der in etwa durch den Pfeil 29 angezeigt ist.

Im Sensorkopf 8 ist für den eigentlichen messenden Bestandteil des Sensors, insbesondere den substratgestützten Piezokristall eine Höhlung 19 vorgesehen, wobei der Aufbau dieser messempfindlichen Sensoranordnung innerhalb des Sensors eine getrennte Erfindung darstellt und hier nicht weiter gezeigt ist. Wesentlich ist, dass die durch den Messabschnitt 10 übertragenen Parameter Druck und Temperatur oder einer dieser Parameter mit entsprechender Genauigkeit als Signal an die Sensorantenne 11 weitergegeben werden kann.

Über dem Sensorkopf 8 sitzt ein Isolationsschaft 20, dessen Längserstreckung die Stärke der Backplatte überwindet. Auf dem Isolationsschaft 20 sitzt die Reflektorplatte 15. Nicht dargestellt ist die elektrische Leitung, die innerhalb des Sensors vom Sensorkopf 8 bis zur Antenne 11 reicht und selbstverständlich den hohen Temperaturen eines Backofens standhalten muss.

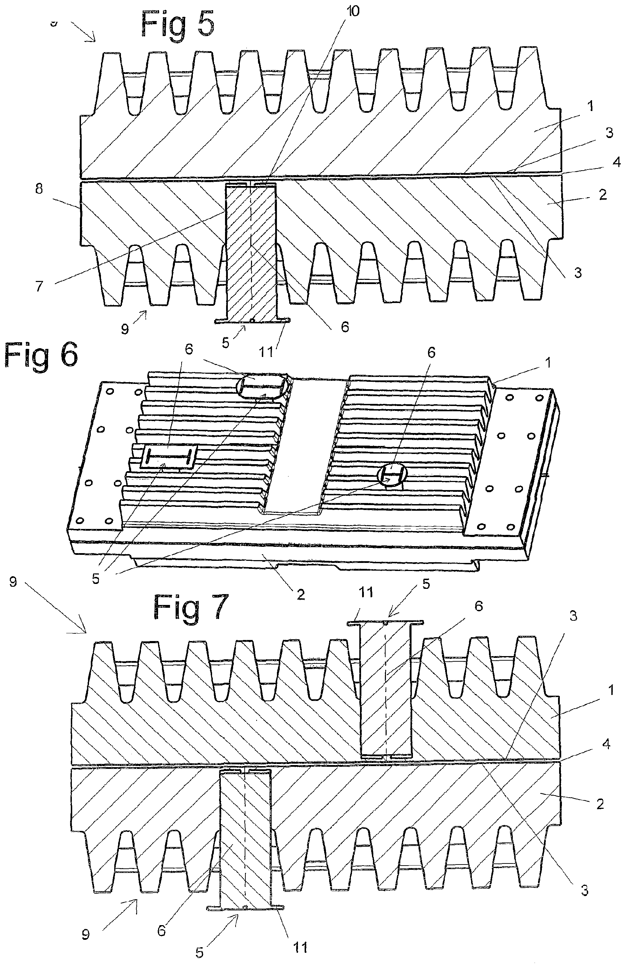

Die Fig. 5 soll lediglich veranschaulichen, dass der Sensor 6 anstelle in der oberen Backplatte 1 auch in der unteren Backplatte 2 angeordnet sein kann. Ähnlich zeigt die Fig. 6 die mehrfache Anordnung von Sensoren entweder in der unteren und/oder oberen Backplatte, im vorliegenden Beispiel die Anordnung von drei Sensoren in der oberen Backplatte als Sensoreinrichtung. Fig. 7 zeigt die Anordnung von jeweils einem Sensor in der unteren und oberen Backplatte.

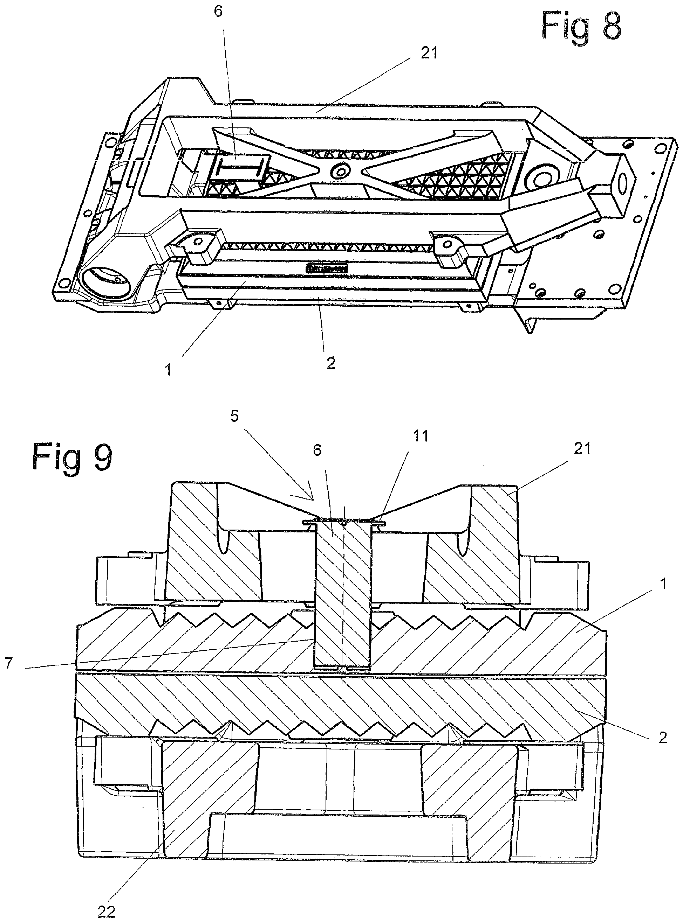

Die Figuren 8, 9 veranschaulichen die Anordnung eines Sensors 6 in einer anderen Ausführungsvariante von Backzangen, wobei die Backplatten nicht selbsttragend ausgebildet sind, sondern in einem Tragegestell 21, 22 montiert sind. Auch diese prinzipielle Ausführung einer Backplatte ist dem Stand der Technik entnehmbar und bedarf keiner weiteren Erläuterung, da die Art der Montage der Backplatten alleine im vorliegenden Fall nicht erfindungswesentlich ist. Der Fachmann erkennt auch, dass es sich bei dem dargestellten Zangenwagen um eine Backplatte ohne Verriegelung handelt, wie sie beispielsweise für die Herstellung von Weichwaffeln oder für die Herstellung von Backfladen zur späteren Ausbildung von Waffeltüten eingesetzt wird. In gleicher Weise kann ein Sensor aber auch für Zangenwagen mit Verriegelung vorgesehen werden.

Das Tragegestell ist als oberes Tragegestell 21 und unteres Tragegestell 22 eingezeichnet. Der Sensor 6 sitzt in seiner Sensoraufnahmeöffnung 7 in der oberen Backplatte 1. Der Sensor erstreckt sich auch hier soweit nach oben, dass er vom Tragegestell 21 geschützt ist, aber die Wirkung der Sensorantenne 11 nicht geschmälert ist.

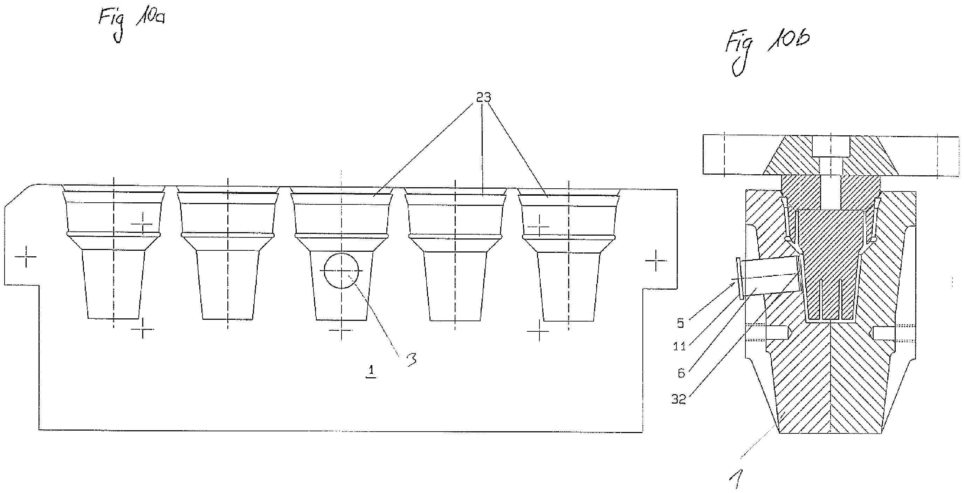

Die Fig. 10a zeigt die Innenansicht einer Matrizenhälfte schematisch zur Herstellung gegossener Waffeltüten, wobei der Sensor 6 in eine der Matrizenausnehmungen 23 eingesetzt ist, wobei für den Sensor 6 eine eigene Backfläche 32 vorgesehen wird, an der in analoger Weise Druck und/oder Temperatur gemessen werden kann. Fig. 10b zeigt den Querschnitt durch die mittlere Matrize in geschlossenem Zustand.

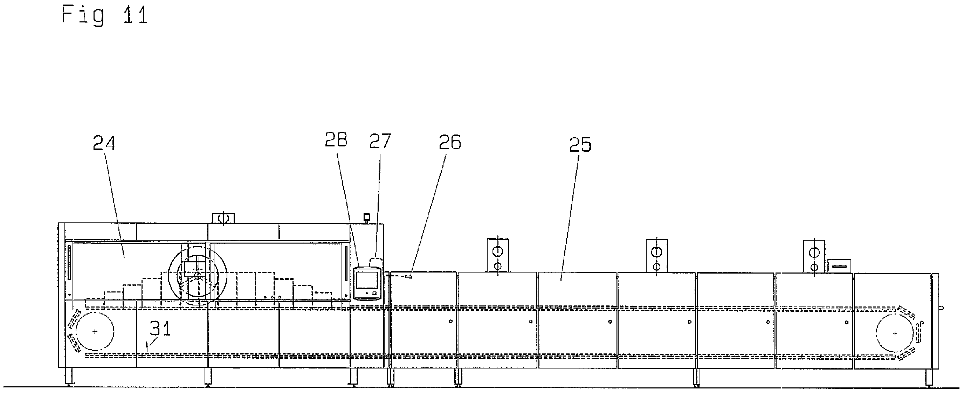

Die Fig. 11 zeigt schematisch einen Überblick über die gesamte Backvorrichtung. Nach der Ausgabe-Eingabestation 24 fahren die mit dem Sensor oder Sensoren versehenen Backplatten in den Backraum 25 des Ofens. Im Anfangsabschnitt des Backraums sitzt das Lesegerät einer Funkantenne, die ihr elektromagnetisches Feld in Richtung der Sensoren der vorbeilaufenden Backzangen abstrahlt. Durch die Messparameter der Sensoren verändert sich das elektromagnetische Feld in charakteristischer Weise, was durch das Lesegerät 26 ausgewertet werden kann. Das Lesegerät liefert seine Signale über die Antennenverkabelung 27 an die Auswerteeinrichtung 28, die z.B. ein Display für den Operator der Backvorrichtung umfasst, wobei das Display bei Veränderungen der Backparameter entsprechende Warnungen ausgeben kann. Die Auswerteeinrichtung kann aber auch die selbständige Regelung der Backparameter vorsehen.

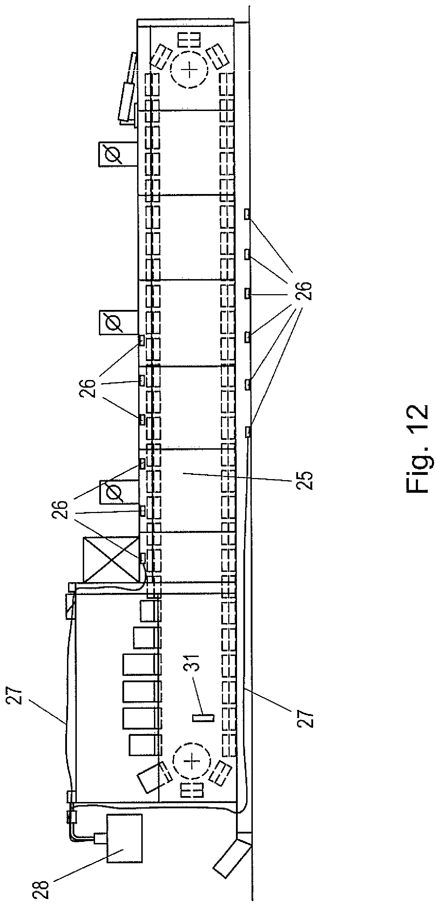

Die genaue Anordnung der Lesegeräte oder einer Mehrzahl von Lesegeräten entlang der Prozessstrecke für den Backvorgang kann beliebig und den Umständen entsprechend gewählt werden. Die Fig. 12 zeigt beispielsweise im anfänglichen Teil des Backraums die Anordnung von sechs Lesegeräten 26 und zusätzlich auch noch weitere sechs Lesegeräte im rückführenden Teil der Backzangenkette. Dies nur zur Erläuterung, dass vielfältige Anordnungsmöglichkeiten gegeben sind. So ist es möglich den gesamten Prozessverlauf jeder Backplatte zu verfolgen und eine Optimierung des Backprozesses herbeizuführen.

Fig. 12 zeigt auch noch schematisch die Positionsanzeige 31, die anzeigt, in welcher Anordnung sich die Backzangenkette befindet. Damit ist die genaue Zuordnung der von den Lesegeräten 26 gelieferten Messdaten an die Backplatten und deren Stellung im Backofen möglich.

Die Fig. 13 zeigt schematisch eine alternative zur Anordnung des Sensors in der Sensoraufnahmeöffnung 7. Der Stempel 17, der für die Übertragung der Messgrößen auf den Sensorkopf 8 verantwortlich ist, ist fixer Bestandteil der Sensormembran 16 und ragt nach unten zum Messabschnitt 10 der Backplatte. Die Riffelung 33 der Backfläche 3 ist nicht durchbrochen, da der Messabschnitt 10 durchgehend einstückig mit der Backplatte 1 ist.

Die Fig. 14 zeigt noch eine andere Alternative zur Ausbildung der Messanordnung. Die Sensoraufnahmeöffnung 7 erstreckt sich über einen Abschnitt 32 mit verringertem Durchmesser bis in die Backfläche 3, sodass eine durchgehende Öffnung vorliegt. Der Stempel 17 erstreckt sich von der Sensormembran 16 durch den Abschnitt 32 hindurch bis zur Backfläche 3. Wenn am fertigen Waffelprodukt optisch die Messstelle des Stempels 17 nicht erkennbar sein soll, kann auch der Stempel 17 durchgehend mit der Riffelung versehen werden.

### Bezugszeichenliste

- 1: obere Backplatte
- 2: untere Backplatte
- 3: Backfläche
- 4: Spalt
- 5: Sensoreinrichtung
- 6: Sensor
- 7: Sensoraufnahmeöffnung
- 8: Sensorkopf
- 9: Backplattenrücken
- 10: Messabschnitt
- 11: Sensorantenne
- 12: Backzangengelenk
- 13: Rollen
- 14: Steuerrolle
- 15: Reflektorplatte
- 16: Sensormembran
- 17: Stempel
- 18: Pfeil
- 19: Höhlung
- 20: Isolationsschaft
- 21: Oberes Tragegestell
- 22: Unteres Tragegestell
- 23: Matrizenausnehmung
- 24: Ausgabe-Eingabestation
- 25: Backraum
- 26: Funkantenne, Lesegerät
- 27: Antennenverkabelung
- 28: Auswerteeinrichtung
- 29: Pfeil
- 30: Ringspannelement
- 31: Positionsanzeige
- 32: Abschnitt
- 33: Riffelung

## Patentansprüche

1. Backofen mit mindestens einer umlaufenden Backzange zum Herstellen von gebackenen Produkten, insbesondere von essbaren knusprigen Waffeln oder Weichwaffeln, wobei als Bestandteil der mindestens einen Backzange jeweils eine untere und eine obere Backplatte (1, 2) vorgesehen sind, deren Backflächen auf Backtemperatur heizbar sind, die Backzangen in mit Teig beschickter geschlossener Stellung durch den Backraum bewegbar sind, **dadurch gekennzeichnet, dass** zumindest eine der oberen oder der unteren Backplatten (1, 2) eine Sensoreinrichtung (5) zur Erfassung der Temperatur der Backplatte (1, 2) und/oder des beim Backprozess auf die Backfläche (3) der Backplatte (1, 2) einwirkenden Druckes aufweist, und wobei die Sensoreinrichtung (5) zumindest einen Sensor (6) enthält, wobei der Sensor (6) in einer Sensoraufnahmeöffnung (7) in der Backplatte (1, 2) angeordnet ist, sodass der Sensor (6) mit seinem Sensorkopf (8) in der Backfläche (3) liegt oder bis nahe an die Backfläche (3) heranreichend zu liegen kommt.

2. Backofen nach Anspruch 1, **dadurch gekennzeichnet, dass** die Sensoraufnahmeöffnung (7) von der Rückseite (29) der mit der Sensoreinrichtung versehenen Backplatte (1, 2) ausgehend zu einem Messabschnitt (10) bis nahe an die Backfläche (3) heranreichend ausgebildet ist, wobei die Backfläche und der Messabschnitt durchgehend verlaufend sind.

3. Backofen nach Anspruch 1, **dadurch gekennzeichnet, dass** die Sensoraufnahmeöffnung (7) von der Rückseite (29) der mit der Sensoreinrichtung versehenen Backplatte (1, 2) ausgehend die Backplatte (1, 2) durchragt und der Sensorkopf (8) mit seiner Sensormembran (16) in der Backfläche liegt und mit dieser gleich profiliert ist.

4. Backofen nach einem der Ansprüche 1 oder 2, **dadurch gekennzeichnet, dass** der Messabschnitt (10) der Sensoraufnahmeöffnung (7) einen zum Sensorkopf (8) oder dessen Sensormembran (16) ragenden Stempel (17) zur Übertragung der auf den Messabschnitt (10) einwirkenden Messgrößen aufweist.

5. Backofen nach einem der Ansprüche 1 bis 3, **dadurch gekennzeichnet, dass** die Sensormembran (16) einen zum Messabschnitt (10) ragenden Stempel (17) aufweist.

6. Backofen nach einem der Ansprüche 1 bis 5, **dadurch gekennzeichnet, dass** der Messabschnitt (10) eine Wandstärke zwischen 1 und 3mm aufweist.

7. Backofen nach einem der Ansprüche 1 bis 6, **dadurch gekennzeichnet, dass** die Sensoraufnahmeöffnung (7) als ein in die mit der Sensoreinrichtung versehenen Backplatte (1, 2) hineinragendes Sackloch ausgebildet ist und dass der Sensor (6) mit seinem Sensorkopf (8) zylindrisch geformt ist und mittels eines Ringspannelementes (30) in der Backplatte (1, 2) befestigt ist.

8. Backofen nach einem der Ansprüche 1 bis 7, **dadurch gekennzeichnet, dass** der Sensor (6) ein passiver, bevorzugt mittels elektromagnetischem Feld abfragbarer Temperatur-Drucksensor ist, der an seiner Rückseite eine Sensorantenne (11) zur Energie- und Informationsübertragung trägt.

9. Backofen nach Anspruch 8, **dadurch gekennzeichnet, dass** die Sensorantenne (11) eine H-Schlitz-Antenne ist.

10. Backofen nach Anspruch 9, **dadurch gekennzeichnet, dass** unter der Sensorantenne (11) eine Reflektorplatte angeordnet ist, welche am Sensorkopf (8) oder dessen Schaft (20) befestigt ist.

11. Backofen nach einem der Ansprüche 1 bis 10, **dadurch gekennzeichnet, dass** die mit der Sensoreinrichtung versehene Backplatte (1, 2) mehrere Sensoren (6) aufweist.

12. Backofen nach einem der Ansprüche 1 bis 11, **dadurch gekennzeichnet, dass** zumindest eine der in einem Backofen umlaufenden Backplatten (1, 2) mit zumindest einer Sensoreinrichtung (5) versehen sind.

13. Backofen nach einem der Ansprüche 1 bis 12, **dadurch gekennzeichnet, dass** mehrere oder alle Backplatten (1, 2) des Backofens mit einer Sensoreinrichtung (5) versehen sind.

14. Backofen nach einem der Ansprüche 1 bis 13, **dadurch gekennzeichnet, dass** im Backofen eine die Stellung jeder Backzange und deren mit der Sensoreinrichtung (5) versehenen Backplatten (1, 2) anzeigende Positionsanzeige (31) vorgesehen ist, um jeden von einem Lesegerät (26) gelesenen Messwert einer bestimmten Backplatte (1, 2) und Backzange und deren Position im Backofen zuordnen zu können.

15. Backofen nach einem der Ansprüche 1 bis 14, **dadurch gekennzeichnet, dass** ein Lesegerät (26) im Backraum (25) vorgesehen ist, oder dass mehrere Lesegeräte (26) im Backraum (25) aufeinanderfolgend vorgesehen sind und die nacheinander abgelesenen Messwerte und die Identifikationsmerkmale der Sensoreinrichtungen der Backplatten einer Auswertvorrichtung zugeleitet werden.

16. Backofen nach einem der Ansprüche 1 bis 15, **dadurch gekennzeichnet, dass** die Sensoren (6) SAW-Sensoren auf Basis piezoelektrischer Substratkristalle sind.

17. Backofen nach einem oder mehreren der Ansprüche 1 bis 16, **dadurch gekennzeichnet, dass** die Produkte in einer Backzange zwischen zwei übereinander angeordneten Backplatten (1, 2) gebacken werden, wobei der Backofen ein mit einer äußeren Wärmeisolierung versehenes Ofengestell besitzt und der Backofen umlaufende Backzangen umfasst, die entlang einer durch den Backraum des Backofens führenden Umlaufbahn angeordnet sind und von der Fördereinrichtung des Backofens entlang der Umlaufbahn durch den Backofen befördert werden, wobei im Ofengestell an einem außerhalb des Backraumes angeordneten Teil der Umlaufbahn der Backzangen eine Einrichtung zum Aufklappen der Backzangen, eine Ausgabestation für die gebackenen Produkte, eine Beschickungsstation zum Beschicken der Backzangen und eine Einrichtung zum Zuklappen der Backzangen in Laufrichtung der Backzangen hintereinander angeordnet sind, und, dass eine in den Backofen integrierte, die Arbeitstätigkeit des Backofens und den in den Backzangen ablaufenden Backprozess erfassende Überwachungseinrichtung vorgesehen ist, die versehen ist mit:
(a) einer Sensoreinrichtung, die zumindest einen an einer Backzange angeordneten, den in der Backzange ablaufenden Backprozess erfassenden Sensor umfasst, der als ein passiver, durch ein elektromagnetisches Feld abfragbarer Sensor ausgebildet ist,
(b) einer Sende- und Empfangseinrichtung, die im Backofen stationär angeordnet ist und zumindest eine an der Umlaufbahn der Backzangenkette angeordnetes Lesegerät umfasst, das über das elektromagnetische Feld mit dem Sensor der Sensoreinrichtung kommuniziert, und einer Auswertvorrichtung, die die vom Sensor über das Lesegerät kommenden Signale verarbeitet und Monitoring-Signale erzeugt.

## Claims

1. A baking oven having at least one circulating baking tong for producing baked products, in particular edible crisp wafers or soft waffles, a lower and an upper baking plate (1, 2) being provided as parts of each of the at least one baking tong, the baking surface of which baking plates being heatable to baking temperature, the baking tongs, when in the closed position filled with batter, being movable through the baking chamber, **characterised in that** at least one of the upper or the lower baking plates (1, 2) has a sensor device (5) for detecting the temperature of the baking plate (1, 2) and/or the pressure acting on the baking surface (3) of the baking plate (1, 2) during the baking process, and wherein the sensor device (5) contains at least one sensor (6), wherein the sensor (6) is arranged in a sensor-holding opening (7) in the baking plate (1, 2) such that the sensor head (8) of the sensor (6) lies in the baking surface (3) or comes to lie in close proximity to the baking surface (3).

2. The baking oven according to claim 1, **characterised in that** the sensor-holding opening (7) runs from the back (29) of the baking plate (1, 2) provided with the sensor device towards a measurement section (10) until a close proximity to the baking surface (3), wherein the baking surface and the measurement section are continuous.

3. The baking oven according to claim 1, **characterised in that** the sensor-holding opening (7) passes through the baking plate (1, 2) starting from the back (29) of the baking plate (1, 2) provided with the sensor device, and the sensor membrane (16) of the sensor head (8) lies in the baking surface and has the same profile as the baking surface.

4. The baking oven according to one of claims 1 or 2, **characterised in that** the measurement section (10) of the sensor-holding opening (7) has a stamp (17) which protrudes towards the sensor head (8) or the sensor membrane (16) thereof to transfer the measurement variables acting on the measurement section (10).

5. The baking oven according to any one of claims 1 to 3, **characterised in that** the sensor membrane (16) has a stamp (17) protruding towards the measurement section (10).

6. The baking oven according to any one of claims 1 to 5, **characterised in that** the measurement section (10) has a wall thickness between 1 and 3 mm.

7. The baking oven according to any one of claims 1 to 6, **characterised in that** the sensor-holding opening (7) is in the form of a blind hole in the baking plate (1, 2) provided with the sensor device, and the sensor (6) with the sensor head (8) thereof is cylindrical and is fastened in the baking plate (1, 2) by means of a clamping collar element (30).

8. The baking oven according to any one of claims 1 to 7, **characterised in that** the sensor (6) is a passive temperature and pressure sensor which can preferably be interrogated by means of an electromagnetic field and bears a sensor antenna (11) on the back of the sensor to transfer energy and information.

9. The baking oven according to claim 8, **characterised in that** the sensor antenna (11) is an H-slot antenna.

10. The baking oven according to claim 9, **characterised in that** a reflector plate is arranged under the sensor antenna (11) and is fastened to the sensor head (8) or the shaft (20) thereof.

11. The baking oven according to any one of claims 1 to 10, **characterised in that** the baking plate (1, 2) provided with the sensor device has multiple sensors (6).

12. The baking oven according to any one of claims 1 to 11, **characterised in that** at least one of the baking plates (1, 2) circulating in a baking oven is provided with at least one sensor device (5).

13. The baking oven according to any one of claims 1 to 12, **characterised in that** some or all of the baking plates (1, 2) of the baking oven are provided with a sensor device (5).

14. The baking oven according to any one of claims 1 to 13, **characterised in that** a position indicator (31) which indicates the position of each baking tong and of the baking plates (1, 2) thereof provided with the sensor device (5) is provided in the baking oven in order to be able to assign each measured value read from a read unit (26) to a certain baking plate (1, 2) and baking tong and to the position thereof in the baking oven.

15. The baking oven according to any one of claims 1 to 14, **characterised in that** a read unit (26) is provided in the baking chamber (25), or multiple read units (26) are provided successively in the baking chamber (25), and the successively read measured values and the identifying features of the sensor devices of the baking plates are fed to an evaluation device.

16. The baking oven according to any one of claims 1 to 15, **characterised in that** the sensors (6) are SAW sensors on the basis of piezoelectric substrate crystals.

17. The baking oven according to one or more of claims 1 to 16, **characterised in that** the products are baked in a baking tong, between two baking plates (1, 2) arranged one above the other, wherein the baking oven has an oven frame provided with outer thermal insulation and the baking oven comprises circulating baking tongs which are arranged along a circuit leading through the baking chamber of the baking oven and are conveyed along the circuit through the baking oven by the conveying device of the baking oven, wherein a device for opening the baking tongs, a discharge station for the baked products, a loading station for loading the baking tongs and a device for closing the baking tongs are arranged one behind the other in the running direction of the baking tongs in the oven frame on a part of the circuit of the baking tongs which is outside the baking chamber, and a monitoring device is provided which is integrated in the baking oven, senses the functioning of the baking oven and the baking process proceeding in the baking tongs, and is provided with:
(a) a sensor device which comprises at least one sensor which is arranged on a baking tong, senses the baking process proceeding in the baking tong and is in the form of a passive sensor which can be interrogated by an electromagnetic field,
(b) a transceiver device which is arranged in a stationary manner in the baking oven and comprises at least one read unit which is arranged on the circuit of the baking tong chain and communicates with the sensor of the sensor device via the electromagnetic field, and an evaluation device which processes the signals coming from the sensor via the read unit and generates monitoring signals.

## Revendications

1. Four, avec au moins une pince de cuisson circulante, destiné à fabriquer des produits de boulangerie, notamment des gaufrettes croustillantes ou des gaufres comestibles, en tant que composant de l'au moins une pince de cuisson étant prévues chaque fois une plaque de cuisson (1, 2) supérieure et inférieure, dont les surfaces de cuisson peuvent se chauffer à la température de cuisson, les pinces de cuisson étant déplaçables en position garnie de pâte à travers l'enceinte de cuisson, **caractérisé en ce qu'**au moins l'une des plaques de cuisson (1, 2) supérieure ou inférieure comporte un système de capteur (5) pour la détection de la température de la plaque de cuisson (1, 2) et/ou de la pression agissant sur la surface de cuisson (3) de la plaque de cuisson (1, 2) lors du processus de cuisson, et le système de capteur (5) contenant au moins un capteur (6), le capteur (6) étant placé dans un orifice de logement de capteur (7) dans la plaque de cuisson (1, 2), de sorte que par sa tête de capteur (8), le capteur (6) se situe dans la surface de cuisson (3) ou vienne se situer de sorte à arriver jusqu'à proximité de la surface de cuisson (3).

2. Four selon la revendication 1, **caractérisé en ce que** l'orifice de logement de capteur (7) est conçu à partir de la face arrière (29) de la plaque de cuisson (1, 2) munie du système de capteur jusqu'à une portion de mesure (10) arrivant jusqu'à proximité de la surface de cuisson (3), la surface de cuisson et la portion de mesure s'écoulant en continu.

3. Four selon la revendication 1, **caractérisé en ce que** l'orifice de logement de capteur (7) saillit à travers la plaque de cuisson (1, 2), en partant de la face arrière (29) de la plaque de cuisson (1, 2) munie du système de capteur et **en ce que** par sa membrane de capteur (16), la tête de capteur (8) se situe dans la surface de cuisson et est profilée à l'identique de celle-ci.

4. Four selon l'une quelconque des revendications 1 ou 2, **caractérisé en ce que** la portion de mesure (10) de l'orifice de logement de capteur (7) comporte un poinçon (17) saillant vers la tête de capteur (8) ou la membrane de capteur (16) de celle-ci, pour la transmission des grandeurs mesurée agissant sur la portion de mesure (10).

5. Four selon l'une quelconque des revendications 1 à 3, **caractérisé en ce que** la membrane de capteur (16) comporte un poinçon (17) saillant vers la portion de mesure (10).

6. Four selon l'une quelconque des revendications 1 à 5, **caractérisé en ce que** la portion de mesure (10) présente une épaisseur de paroi comprise entre 1 et 3 mm.

7. Four selon l'une quelconque des revendications 1 à 6, **caractérisé en ce que** l'orifice de logement de capteur (7) est conçu sous la forme d'un trou borgne saillant à l'intérieur de la plaque de cuisson (1, 2) munie du système de capteur et **en ce que** le capteur (6) avec sa tête de capteur (8) présente une forme cylindrique et est fixé dans la plaque de cuisson (1, 2) au moyen d'un élément de serrage annulaire (30).

8. Four selon l'une quelconque des revendications 1 à 7, **caractérisé en ce que** le capteur (6) est un capteur passif de pression/température, interrogeable de préférence par champ électromagnétique, qui sur sa face arrière porte une antenne de capteur (11) pour la transmission d'énergie et d'informations.

9. Four selon la revendication 8, **caractérisé en ce que** l'antenne de capteur (11) est une antenne à fentes de type H.

10. Four selon la revendication 9, **caractérisé en ce que** sous l'antenne de capteur (11) est placée une plaque réflectrice, laquelle est fixée sur la tête de capteur (8) ou sur la tige (20) de celle-ci.

11. Four selon l'une quelconque des revendications 1 à 10, **caractérisé en ce que** la plaque de cuisson (1, 2) munie du système de capteur comporte plusieurs capteurs (6).

12. Four selon l'une quelconque des revendications 1 à 11, **caractérisé en ce qu'**au moins l'une des plaques de cuisson (1, 2) périphériques dans le four est munie d'au moins un système de capteur (5) .

13. Four selon l'une quelconque des revendications 1 à 12, **caractérisé en ce que** plusieurs ou toutes les plaques de cuisson (1, 2) du four sont munies d'un système de capteur (5).

14. Four selon l'une quelconque des revendications 1 à 13, **caractérisé en ce que** dans le four est prévu un affichage de la position (31) affichant la position de chaque pince de cuisson et des plaques de cuisson (1, 2) de celle-ci munies du système de capteur (5), pour pouvoir associer à une certaine plaque de cuisson (1, 2) et pince de cuisson et à leur position dans le four chaque valeur mesurée lue par un lecteur (26).

15. Four selon l'une quelconque des revendications 1 à 14, **caractérisé en ce qu'**un lecteur (26) est prévu dans l'enceinte de cuisson (25) ou **en ce que** plusieurs lecteurs (26) sont prévus successivement dans l'enceinte de cuisson (25) et **en ce que** les valeurs mesurées lues successivement et les caractéristiques d'identification des systèmes de capteur des plaques de cuisson sont amenées vers un dispositif d'évaluation.

16. Four selon l'une quelconque des revendications 1 à 15, **caractérisé en ce que** les capteurs (6) sont des capteurs SAW sur base de cristaux de substrat piézoélectriques.

17. Four selon l'une quelconque ou plusieurs des revendications 1 à 16, **caractérisé en ce que** les produits sont cuits dans une pince de cuisson entre deux plaques de cuisson (1, 2) superposées, le four étant doté d'un châssis de four muni d'une isolation thermique extérieure et le four comprenant des pinces de cuisson circulantes, qui sont placées le long d'une trajectoire de circulation conduisant à travers l'enceinte de cuisson du four et sont convoyées par le système de convoyage du four le long de la trajectoire de circulation à travers le four, dans le châssis du four, sur une partie de la trajectoire de circulation des pinces de cuisson placée à l'extérieur de l'enceinte de cuisson étant placés l'un derrière l'autre, dans la direction de marche des pinces de cuisson un système de déploiement des pinces de cuisson, un poste de distribution des produits cuits au four, un poste de chargement pour charger les pinces de cuisson et un système de fermeture des pinces de cuisson et **en ce qu'**il est prévu un système de supervision intégré dans le four, détectant l'activité du four et le processus de cuisson au four qui se déroule dans les pinces de cuisson qui est muni :
(a) d'un système de capteur, qui comporte au moins un capteur placé sur une pince de cuisson, détectant le processus de cuisson au four qui se déroule dans la pince de cuisson, qui est conçu sous la forme d'un capteur passif, interrogeable par un champ électromagnétique,
(b) un système émetteur/récepteur, qui est placé de manière stationnaire dans le four et qui comprend au moins un lecteur placé sur la trajectoire de circulation de la chaîne de pinces de cuisson, qui par l'intermédiaire du champ électromagnétique, communique avec le capteur du système de capteur et un dispositif d'évaluation qui traite les signaux arrivant du capteur par l'intermédiaire du lecteur et qui génère des signaux de monitorage.
